# FASCICULE DE BREVET EUROPEEN

(11) **EP 1 349 741 B1**
(45) Date de publication et mention de la délivrance du brevet: **03.01.2007**
(21) Numéro de dépôt: 01270432.6
(22) Date de dépôt: 11.12.2001
(51) Int. Cl.: B60H 1/00

(54) **AGENCEMENT DE PALIER DE CLAPET D'AIR**
LUFTKLAPPENLAGERANORDNUNG
DAMPER BEARING ARRANGEMENT

(30) Priorité: 13.12.2000 DE 10062034
(43) Date de publication de la demande: 08.10.2003
(73) Titulaire: Valeo Klimasysteme GmbH, 96476 Rodach (DE)
(72) Inventeur: SCHMIDT, Hendrick, 38100 Braunschweig (DE); WICHERT, Volker, 38302 Wolfenbüttel (DE); RUDLOFF, Emmanuel, F-72100 Le Mans (FR)
(74) Mandataire: Léveillé, Christophe
(86) Numéro de dépôt international: PCT/FR2001/003953
(87) Numéro de publication internationale: WO 2002/047928

(56) Documents cités:
- EP-A- 0 680 839
- FR-A- 1 118 511
- FR-A- 2 418 109
- US-A- 3 103 867
- PATENT ABSTRACTS OF JAPAN vol. 005, no. 053 (M-063), 14 avril 1981 (1981-04-14) & JP 56 008713 A (NISSAN MOTOR CO LTD;OTHERS: 01), 29 janvier 1981 (1981-01-29)

## Description

La présente invention concerne généralement un agencement de palier de clapet d'air, tel qu'utilisé en particulier dans des installations de chauffage, ventilation et/ou climatisation de véhicules à moteur.

Les clapets d'air articulés au moyen d'un tel agencement de palier peuvent être réalisés sous la forme de ce qu'on appelle des clapets à drapeaux, des clapets à papillon ou aussi des clapets à coquille.
Habituellement, de tels clapets d'air sont intégrés de manière pivotante entre deux positions au moyen d'un palier fixe dans un boîtier de guidage d'air de l'installation de chauffage, ventilation et/ou climatisation, une charge étant appliquée à chaque fois séparément pour chaque clapet d'air habituellement au niveau du point d'articulation, c'est-à-dire du palier fixe.

Dans certaines installations, un dispositif de clapets d'air à deux branches est monté à pivotement autour d'un palier fixe disposé à l'opposé de l'orifice d'entrée d'air. Les diverses positions de répartition d'air sont obtenues par rotation du dispositif autour du palier fixe et par rotation d'une branche montée à pivotement autour d'un palier mobile par rapport à l'autre branche. Un tel agencement est connu notamment de FR-A-2 418 109.

Une telle disposition est d'une grande complexité et fait intervenir de multiples mécanismes de commandes.

EP-A-0 680 839 divulgue un agencement de palier de clapet d'air selon le préambule de la revendication 1.

Il existe le besoin d'un agencement de palier de clapet d'air amélioré qui permette une utilisation polyvalente.

L'objet de la présente invention est donc de proposer un agencement de palier de clapet d'air au moyen duquel une interaction améliorée entre le clapet d'air sur palier ou articulé et d'autres éléments de l'installation associée de chauffage, ventilation et/ou climatisation soit possible, afin par exemple de fournir au clapet d'air un guidage amélioré, de solliciter de manière variable le clapet d'air, ou également de pouvoir accoupler l'un à liautre de manière efficace des clapets d'air différents.

Conformément à l'invention, l'objectif ci-dessus est réalisé par un agencement de palier de clapet d'air ayant les caractéristiques de la revendication 1. Des perfectionnements avantageux des agencements de palier de clapet d'air selon l'invention sont indiqués dans les revendications secondaires.
En particulier, l'invention propose un agencement de palier de clapet d'air ayant au moins un palier fixe et au moins un palier libre. Grâce à la fourniture d'un palier libre en plus du palier fixe habituellement utilisé, on peut améliorer la cinématique des clapets d'air concernés, par exemple en réalisant une interaction entre le clapet d'air monté mobile et la structure de boîtier de guidage d'air environnante, en intercalant le palier libre. L'utilisation d'un palier libre permet également d'adapter à la position la sollicitation de la force appliquée au clapet d'air. Par exemple, si l'on accouple une sollicitation de force linéaire d'orientation fixe au clapet d'air par le biais du palier libre, le vecteur de force s'étendant perpendiculairement au clapet d'air variera en fonction de la position angulaire du clapet d'air.

Dans une forme de réalisation préférée, le palier libre comprend un palier lisse qui peut être réalisé en particulier sous la forme d'une broche guidée dans un trou oblong. Grâce à la fourniture d'un palier lisse, on peut tenir compte de manière particulièrement simple de la cinématique lors du pivotement du clapet d'air.

Avantageusement, le palier libre permet un mouvement relatif essentiellement dans la direction de l'étendue du clapet d'air concerné. Grâce à cette configuration, la sollicitation d'un clapet d'air ou aussi la sollicitation par le clapet d'air concerné peuvent être également divisées en vecteurs de force, qui s'étendent parallèlement et perpendiculairement au clapet d'air ou au sens de déplacement du clapet d'air.

Dans l'agencement de palier de clapet d'air selon l'invention, un clapet d'air peut être sollicité par le biais du palier fixe et/ou du palier libre. A titre d'exemple, on pourrait se représenter qu'un clapet d'air soit précontraint au moyen d'un ressort spiral dans le cas d'un palier fixe, tandis que le réglage du clapet d'air s'effectue par le biais du palier libre, par l'action sur celui-ci d'une tige de transmission ou d'une bielle, par exemple.

Dans une forme de réalisation préférée, le palier libre est espacé du palier fixe. Par un espacement entre le palier libre et le palier fixe, on peut utiliser avantageusement l'effet de levier réalisé par l'espacement.

De manière avantageuse, le palier libre est disposé essentiellement centralement dans le clapet d'air, dans au moins l'une des directions d'étendue de celui-ci. L'agencement central permet une répartition uniforme des forces lors d'une sollicitation du clapet d'air par le biais du palier libre ou par le biais d'une utilisation élevée de force lorsqu'une force agissant sur le clapet d'air doit être évacuée.

Afin de pouvoir réaliser un accouplement entre plusieurs clapets d'air, par exemple deux clapets d'air, on prévoit avantageusement un dispositif accouplant au moins deux clapets d'air.

Dans une forme de réalisation particulièrement préférée, ce dispositif accouplant au moins deux clapets d'air peut être réalisé sous la forme d'une bascule ou d'un joug.

Avantageusement, le dispositif d'accouplement est amené en engagement avec au moins un clapet d'air, en particulier avec chaque clapet d'air, par le biais du palier libre. Si l'on prévoit par exemple un agencement de palier pour deux clapets, les mouvements des deux clapets peuvent facilement être accouplés l'un à l'autre, sans devoir modifier les cinématiques individuelles respectives des clapets. Le dispositif d'accouplement dispose avantageusement d'un palier, en particulier d'un palier fixe, afin de pouvoir fournir une interaction, par exemple une articulation par rapport au boîtier de guidage d'air de l'installation de chauffage, ventilation et/ou climatisation.

Finalement, on préfère qu'au moins un clapet d'air puisse être sollicité par la sollicitation d'un autre clapet d'air dans le sens opposé à celui-ci. Grâce à cette configuration, on peut réaliser au moyen de deux clapets à drapeaux ou fanions séparés l'un de l'autre, la fonction d'un clapet à papillon avec une meilleure cinématique et répartition de force.

D'autres avantages et caractéristiques de l'invention résultent en outre de la description suivante d'une mise en oeuvre actuellement préférée d'une forme de réalisation préférée de l'agencement de palier de clapet d'air selon l'invention, comme décrit uniquement à titre d'exemple ci-après en référence aux dessins annexés, dans lesquels :
la figure 1 illustre en vue latérale schématique un agencement de deux clapets d'air et d'un dispositif les accouplant.
La figure 2 illustre l'agencement illustré dans la figure 1 en représentation en perspective.

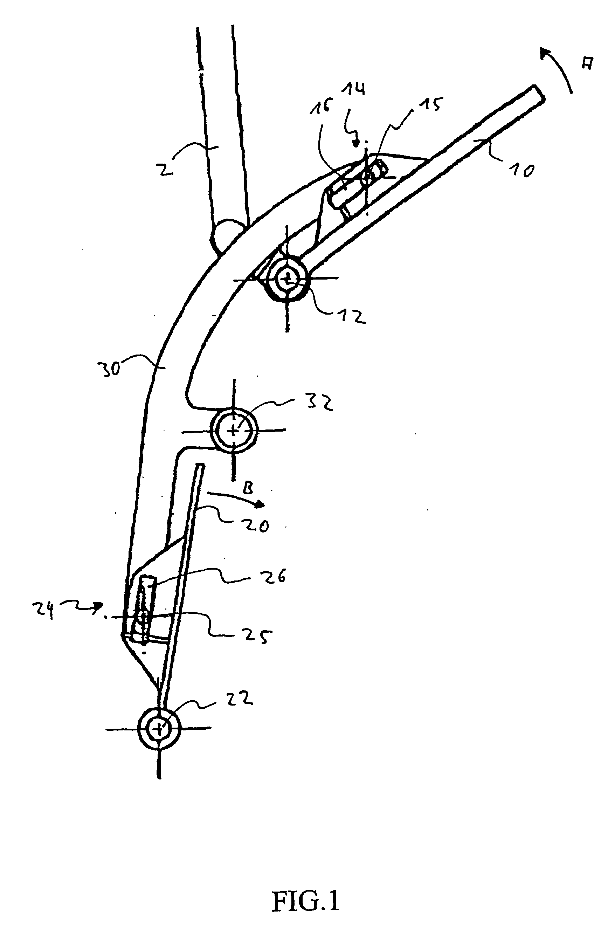

La figure 1 illustre en vue latérale schématique, un exemple d'application d'une forme de réalisation préférée d'un agencement de palier de clapet d'air selon l'invention, qui est prévu par exemple dans un boîtier de guidage d'air d'une installation de chauffage, ventilation et/ou climatisation d'un véhicule à moteur.

Dans l'exemple d'application illustré, un premier clapet d'air 10 est articulé pivotant de manière connue en soi, au niveau du repère de référence 12. Autrement dit, l'articulation 12 forme ce qu'on appelle un palier fixe ou pivotant. Le clapet 10 est en outre pourvu d'un palier libre 14, qui est formé, dans la forme de réalisation illustrée, d'un trou oblong 16 et d'une broche 15 guidée dans celui-ci. Dans l'exemple d'application illustré, le premier clapet 10 peut être sollicité au moyen d'un élément d'actionnement 2, qui peut être déplacé, dans le dessin, vers le haut et le bas, par exemple par un moteur pas-à-pas non illustré. Lorsque l'élément d'actionnement 2 est déplacé vers le bas, le clapet 10 est pivoté suivant la flèche A par l'articulation en forme de levier au niveau du point de pivot 12. Lors de ce pivotement du clapet d'air 10, la broche 15 glisse dans le trou oblong 16, l'élément 30 étant pivoté autour d'un palier fixe associé 32.

Bien que dans l'exemple d'application illustré, l'élément 30 agisse par rapport à un deuxième clapet d'air 20 en tant qu'élément d'accouplement, il serait aussi envisageable que l'élément 30 se termine en dessous du palier fixe 32, de sorte que seulement un guidage supplémentaire du clapet d'air 10 soit fourni. En variante, il serait aussi envisageable de prévoir, au lieu du deuxième clapet d'air 20, un agencement de ressort, pour précontraindre le clapet d'air 10 dans l'une de ses positions.

Si l'on se réfère à nouveau à la figure 1, l'élément 30 est toutefois prévu sous forme d'élément d'accouplement, et agit à la manière d'un joug ou d'une bascule, et sera donc pivoté autour du palier fixe 32 dans le cas d'un pivotement du clapet d'air 10 dans la direction de la flèche A. Par le pivotement de l'élément d'accouplement 30, une autre broche ou tourillon 25 qui lui est associé(e) se déplace dans le dessin en biais vers la droite et le bas, de sorte qu'au moyen du palier libre 24, formé par la broche 25 et un trou oblong 26, et associé au deuxième clapet d'air 20, un pivotement du deuxième clapet d'air 20 soit permis autour d'un palier fixe 22 associé à lui, dans une direction correspondant à la flèche B. Ainsi, l'exemple d'application illustré permet d'accoupler le mouvement du clapet d'air 10 avec celui du clapet d'air 20 de telle sorte que l'on obtienne un pivotement du deuxième clapet d'air 20 dans le sens opposé ou contraire.

Bien que dans l'exemple d'application illustré, l'élément d'accouplement soit réalisé avec une forme courbe et excentrée par rapport au palier fixe 32, il s'entend que l'élément d'accouplement 30 pourrait aussi être réalisé de manière rectiligne, le palier fixe 32 pouvant lui aussi ne pas être excentrique au cas où, par exemple, les clapets d'air 10 et 20 s'étendent essentiellement en parallèle dans une position de départ. Par le biais des longueurs de levier respectives de l'élément d'accouplement 30, comme du positionnement correspondant des paliers libres 14, 24 sur les clapets d'air 10 et 20, on peut obtenir facilement une cinématique de l'agencement complet optimisée au cas particulier. En outre, il serait aussi possible, par de petites adaptations, de fournir un pivotement de même sens de deux clapets d'air, un accouplement de plus que deux clapets d'air étant aussi réalisable.

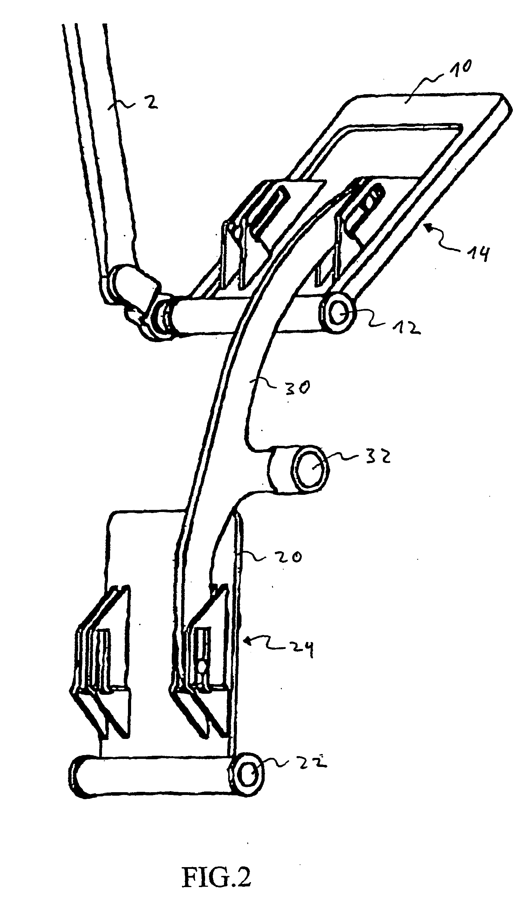

La figure 2 illustre en perspective l'exemple d'application illustré à la figure 1. Comme on peut le voir, chacun des clapets d'air 10, 20 est pourvu d'un palier fixe 12, respectivement 22, et de deux paliers libres 14, respectivement 24, seul un élément d'accouplement 30 entre un palier libre de chacun des clapets d'air 10, 20 étant illustré. Comme on peut le voir dans la figure 2, les trous oblongs 16 et 26 sont réalisés chacun à une extrémité de telle manière que, pour des raisons de montage, les broches ou les tourillons 25 et 15 puissent être insérés facilement par une extrémité.

En résumé, on peut constater que l'agencement de palier de clapet d'air selon l'invention permet de faire interagir un clapet d'air avec d'autres composants de type mobile ou fixe, de sorte que de très nombreuses propriétés de guidage, sollicitations et possibilités d'accouplement puissent être mises en oeuvre. Il convient de comprendre que la présente invention n'est pas limitée à l'exemple d'application illustré et décrit, mais qu'elle englobe au contraire toutes les possibilités qui appartiennent au cadre des revendications annexées.

## Revendications

1. Agencement de palier de clapet d'air comprenant au moins un clapet d'air (10; 20) ayant au moins un premier palier fixe (12; 22; 12, 22) et au moins un palier libre (14; 24; 14,24) comportant en outre un élément d'accouplement (30) disposant d'au moins un deuxième palier fixe (32) et est engagé avec le clapet d'air (10; 20) par l'intermédiaire du palier libre (14; 24; 14,24) **caractérisé en ce que** le palier libre (14; 24; 14, 24) est positionné sur le clapet d'air (10; 20).

2. Agencement de palier de clapet d'air selon la revendication 1, dans lequel le palier libre (14; 24; 14, 24) comprend un palier lisse, en particulier une broche (15, 25) guidée dans un trou oblong (16, 26).

3. Agencement de palier de clapet d'air selon l'une quelconque des revendications 1 ou 2, dans lequel le palier libre (14; 24; 14, 24) permet un mouvement relatif essentiellement dans la direction de l'étendue du clapet d'air (10, 20).

4. Agencement de palier de clapet d'air selon l'une quelconque des revendications précédentes, dans lequel au moins un clapet d'air (10, 20) peut être sollicité par le biais du palier fixe (12, 22) et/ou du palier libre (14, 24).

5. Agencement de palier de clapet d'air selon l'une quelconque des revendications précédentes, dans lequel le palier libre (14, 24) est prévu espacé du palier fixe (12, 22).

6. Agencement de palier de clapet d'air selon l'une quelconque des revendications précédentes, dans lequel le palier libre (14, 24) est disposé essentiellement centralement sur le clapet d'air (10, 20) dans au moins l'une des directions d'étendue de celui-ci.

7. Agencement de palier de clapet d'air selon l'une quelconque des revendications précédentes, dans lequel le dispositif d'accouplement (30) relie au moins deux clapets d'air (10, 20).

8. Agencement de palier de clapet d'air selon la revendication 7, dans lequel au moins un clapet d'air (20) peut être sollicité par la sollicitation d'un autre clapet d'air (10), dans le sens contraire à celui-ci.

9. Installation de chauffage, ventilation et/ou climatisation **caractérisée en qu'**elle comporte un boîtier de guidage d'air comportant un agencement de palier de clapet d'air selon l'une des revendications précédentes.

10. Installation de chauffage, ventilation et/ou climatisation selon la revendication 9 dans laquelle au moins un palier fixe (12 ; 22) est une articulation entre le clapet d'air (10 ; 20) et le boîtier de guidage d'air.

11. Installation de chauffage, ventilation et/ou climatisation selon l'une des revendications 9 ou 10 dans laquelle le dispositif d'accouplement (30) est en interaction avec le boîtier de guidage d'air par une articulation, en particulier un palier fixe (32).

## Claims

1. An air valve bearing fitting comprising at least one air valve (10; 20) having at least one first fixed bearing (12; 22; 12, 22) and at least one floating bearing (14; 24; 14, 24) further including a coupling element (30) having at least one second fixed bearing (32) and is engaged with the air valve (10; 20) via the floating bearing (14; 24; 14, 24) **characterised in that** the floating bearing (14; 24; 14, 24) is positioned on the air valve (10; 20).

2. The air valve bearing fitting according to claim 1, wherein the floating bearing (14; 24; 14, 24) comprises a plain bearing, in particular a pin (15, 25) guided in an oblong hole (16, 26).

3. The air valve bearing fitting according to any one of claims 1 or 2, wherein the floating bearing (14; 24; 14, 24) allows relative movement essentially in the direction of extent of the air valve (10, 20).

4. The air valve bearing fitting according to any one of the preceding claims, wherein at least one air valve (10, 20) can be acted upon by means of the fixed bearing (12, 22) and/or the floating bearing (14, 24).

5. The air valve bearing fitting according to any one of the preceding claims, wherein the floating bearing (14, 24) is provided spaced apart from the fixed bearing (12, 22).

6. The air valve bearing fitting according to any one of the preceding claims, wherein the floating bearing (14, 24) is positioned essentially centrally on the air valve (10, 20) in at least one of the directions of extent thereof.

7. The air valve bearing fitting according to any one of the preceding claims, wherein the coupling device (30) connects at least two air valves (10, 20).

8. The air valve bearing fitting according to claim 7, wherein at least one air valve (20) can be acted upon by acting upon another air valve (10) in the opposite direction thereto.

9. A heating, ventilating and/or air-conditioning unit **characterised in that** it includes an air guide housing including an air valve bearing fitting according to one of the preceding claims.

10. The heating, ventilating and/or air-conditioning unit according to claim 9 wherein at least one fixed bearing (12; 22) is an articulation between the air valve (10; 20) and the air guide housing.

11. The heating, ventilating and/or air-conditioning unit according to one of claims 9 or 10 wherein the coupling device (30) interacts with the air guide housing via an articulation, particularly a fixed bearing (32).

## Patentansprüche

1. Anordnung von Luftklappenlagern bestehend aus mindestens einer Luftklappe (10,20) mit mindestens einem ersten Festlager (12,22,12,22) und mindestens einem Loslager (14,24,14,24) und außerdem einem Kupplungselement (30), das über mindestens ein zweites Festlager (32) verfügt und mit der Luftklappe (10,20), mit Hilfe des Loslagers (14,24,14,24), verbunden ist, **dadurch gekennzeichnet, dass** das Loslager (14,24,14,24) auf der Luftklappe (10,20) platziert ist.

2. Anordnung von Luftklappenlagern gemäß Anspruch 1, wobei das Loslager (14,24,14,24) ein Gleitlager, insbesondere einen in einem Langloch (16,26) geführten Stift (15,25) umfasst.

3. Anordnung von Luftklappenlagern gemäß einem der Ansprüche 1 oder 2, wobei das Loslager (14,24,14,24) eine relative Bewegung im wesentlichen in Richtung der Ausdehnung der Luftklappe (10,20) erlaubt.

4. Anordnung von Luftklappenlagern gemäß einem der vorhergehenden Ansprüche, wobei mindestens eine Luftklappe (10,20) mittels des Festlagers (12,22) und/oder des Loslagers (14,24) beansprucht werden kann.

5. Anordnung von Luftklappenlagern gemäß einem der vorhergehenden Ansprüche, wobei das Loslager (14,24) mit Abstand zum Festlager (12,22) vorgesehen ist.

6. Anordnung von Luftklappenlagern gemäß einem der vorhergehenden Ansprüche, wobei das Loslager (14,24) im wesentlichen zentral auf der Luftklappe (10,20), in mindestens einer der Ausdehnungsrichtungen der Luftklappe, angeordnet ist.

7. Anordnung von Luftklappenlagern gemäß einem der vorhergehenden Ansprüche, wobei die Kupplungsvorrichtung (30) mindestens zwei Luftklappen (10,20) miteinander verbindet.

8. Anordnung von Luftklappenlagern gemäß Anspruch 7, wobei mindestens eine Luftklappe (20) durch die Beanspruchung einer anderen Luftklappe (10) in entgegengesetzter Richtung der Luftklappe beansprucht werden kann.

9. Heizungs-, Ventilations- und/oder Klimaanlage, **dadurch gekennzeichnet, dass** sie ein Luftführungsgehäuse umfasst, das eine Anordnung von Luftklappenlagern nach einem der vorhergehenden Ansprüche umfasst.

10. Heizungs-, Ventilations- und/oder Klimaanlage gemäß Anspruch 9, wobei mindestens ein Festlager (12,22) ein Gelenk zwischen der Luftklappe (10,20) und dem Luftführungsgehäuse ist.

11. Heizungs-, Ventilations- und/oder Klimaanlage gemäß einem der Ansprüche 9 oder 10, wobei die Kupplungsvorrichtung (30) über ein Gelenk, insbesondere ein Festlager (32), in Wechselwirkung mit dem Luftführungsgehäuse steht.
